# FASCICULE DE BREVET EUROPEEN

(11) **EP 3 630 435 B1**
(45) Date de publication et mention de la délivrance du brevet: **01.01.2025**
(21) Numéro de dépôt: 18735636.5
(22) Date de dépôt: 18.05.2018
(51) Int. Cl.: B29B 11/16, D03D 3/02, D03D 3/08, F02K 1/48

(54) **STRUCTURE FIBREUSE TUBULAIRE A LOBES**
RÖHRENFÖRMIGE FASERSTRUKTUR MIT LÄPPCHEN
TUBULAR FIBROUS STRUCTURE COMPRISING LOBES

(30) Priorité: 23.05.2017 FR 1754578
(43) Date de publication de la demande: 08.04.2020
(73) Titulaire: Safran Nacelles, 76700 Gonfreville-l'Orcher (FR)
(72) Inventeur: DESJOYEAUX, Bertrand, 76700 Gonfreville L'Orcher (FR); PROVOST, Benjamin, 76700 Gonfreville L'Orcher (FR); DEPEUX, Fabien, 76700 Gonfreville L'Orcher (FR); SILVA DE VASCONCELLOS, Davi, 76700 Gonfreville L'Orcher (FR)
(74) Mandataire: Germain Maureau
(86) Numéro de dépôt international: PCT/FR2018/051203
(87) Numéro de publication internationale: WO 2018/215717

(56) Documents cités:
- WO-A2-2014/007907
- FR-A1- 2 875 854
- GB-A- 2 484 349
- CAMPBELL F C ED - CAMPBELL FLAKE C: "Manufacturing processes for advanced composites", 1 January 2004, MANUFACTURING PROCESSES FOR ADVANCED COMPOSITES, ELSEVIER ADVANCED TECHNOLOGY, OXFORD, GB, PAGE(S) 304 - 356, ISBN: 978-1-85617-415-2, XP002580602

## Description

La présente invention se rapporte à une structure fibreuse circulaire à lobes, ainsi qu'à une pièce tubulaire à lobes incorporant cette structure fibreuse.

Une telle pièce peut être utilisée notamment dans l'aéronautique : un exemple d'une telle pièce est un mixeur de flux destiné à équiper le bord de fuite d'une tuyère de turboréacteur à double flux, séparant les flux d'air chaud et froid, afin de favoriser le mélange de ces flux afin d'augmenter la poussée et de réduire les émissions sonores.

Un tel mixeur de flux présente sensiblement une symétrie axiale autour de l'axe principal du turboréacteur, et comporte typiquement en amont (par rapport au sens d'écoulement de l'air) une virole circulaire, et en aval des lobes qui s'accroissent jusqu'au bord de fuite.

Dans la technique antérieure, un tel mixeur de flux est obtenu à partir d'une pluralité de nappes de fibres qui se chevauchent au moins en partie, ce qui nécessite des découpages multiples (et donc de nombreuses chutes) et une mise en oeuvre complexe à la main.

De surcroît, le chevauchement des différentes nappes engendre un surpoids, ainsi que des imperfections aérodynamiques, ce qui est préjudiciable en termes de consommation de carburant et d'acoustique.

Le document FR 2 875 854 A1 divulgue une structure fibreuse tubulaire à lobes (page 5, lignes 23-24), caractérisée en ce qu'elle est formée d'un seul tenant sur au moins deux lobes (page 3, ligne 6), ainsi qu'un procédé générique de fabrication d'une structure fibreuse tubulaire à lobes ainsi qu'un procédé de fabrication d'une pièce en composite à l'aide de ladite structure fibreuse. Toutefois ledit document ne divulgue pas une structure fibreuse tubulaire dans laquelle ses fibres circonférentielles présentent une orientation constante par rapport à l'axe longitudinal de ladite structure, dans tout plan transversal audit axe.

La présente invention vise à résorber ces inconvénients de la technique antérieure.

La présente invention fournit à cet effet une structure fibreuse circulaire à lobes, remarquable en ce qu'elle est formée d'un seul tenant, et en ce que ses fibres circonférentielles présentent une orientation constante par rapport à l'axe longitudinal de ladite structure, dans tout plan transversal audit axe.

Dans le cadre de la présente invention, le terme « circulaire » ou « tubulaire » doit s'entendre comme une structure s'étendant sur une partie ou sur la totalité d'une circonférence.

On comprendra par le terme « orientation contante » que les fibres reproduisent des orientations semblables d'un lobe à un lobe voisin identique. Les fibres sont continues dans le sens circonférentiel.

On comprendra également que chaque fibre circonférentielle n'est pas nécessairement contenue dans un seul et même plan transversal audit axe mais reproduit une géométrie équivalente d'un lobe à un autre lobe voisin identique.

Grâce aux caractéristiques de la structure fibreuse selon l'invention, on peut s'affranchir d'une mise en oeuvre d'une pluralité de nappes de fibres comme c'était le cas dans l'état de la technique, et ainsi gagner en rapidité de mise en oeuvre, en coût, et en performances en vol.

De plus, l'orientation constante des fibres par rapport à l'axe longitudinal de la structure permet de maîtriser complètement les chemins d'effort à l'intérieur de la structure, et ainsi d'optimiser la conception de la pièce finale, notamment en termes de poids.

Suivant d'autres caractéristiques optionnelles de la structure fibreuse selon l'invention, prises seules ou en combinaison :
- cette structure comprend entre deux lobes et jusqu'à une pluralité de lobes,
- cette structure comprend des lobes de formes différentes,
- cette structure comprend des fibres longitudinales inclinées par rapport audit axe longitudinal,
- l'inclinaison desdites fibres longitudinales par rapport audit axe varie selon la position dudit plan transversal,
- cette structure comprend une densité circonférentielle constante ou variable de fibres longitudinales,
- cette structure comprend une densité longitudinale constante ou variable de fibres circonférentielles,
- le ou les matériaux formant lesdites fibres sont choisis dans le groupe comprenant le verre, le basalte, le carbone, le carbure de silicium, les oxydes d'aluminium, les aluminosilicates,
- cette structure est obtenue par tissage ou par enroulement filamentaire.

Les fibres sont dites longitudinales en fonction de leur insertion dans un drapage formant un lobe de la structure. De telles fibres longitudinales présentent des orientations semblables d'un lobe à un autre lobe voisin identique. Plus particulièrement, des fibres longitudinales peuvent être parallèles sur un tronçon cylindrique de la structure, d'autres fibres longitudinales peuvent être inclinées et contenues dans des plans radiaux de la structure et d'autres fibres longitudinales peuvent avoir des angles variés sur leur longueur.

On retrouve alors avantageusement des orientations de fibres semblables sur deux lobes voisins et identiques sans nécessiter de morceler des coupons de tissu formant le drapage de la forme. Les propriétés mécaniques résultant d'une telle structure sont avantageusement semblables d'un lobe à l'autre.

La présente invention se rapporte également à une pièce en composite obtenue à partir d'une structure conforme à ce qui précède, prise dans une matrice.

Suivant d'autres caractéristiques optionnelles de la pièce selon l'invention, prises seules ou en combinaison :
- cette pièce comprend des lobes présentant des formes différentes,
- cette pièce comprend des lobes dont les hauteur et forme sont variables donnant un périmètre variable suivant la position du plan transversal,
- le périmètre de la pièce dans la zone des lobes est plus grand que la plus petite circonférence de la pièce dans la zone sans lobes.

La présente invention se rapporte également à un mixeur de flux pour turboréacteur d'aéronef, remarquable en ce qu'il est formé d'une pièce conforme à ce qui précède.

La présente invention se rapporte également à un procédé de fabrication d'une pièce en composite comportant la structure fibreuse tubulaire à lobes, dans lequel on tisse cette structure fibreuse autour d'un mandrin d'appel présentant une forme correspondant à celle de cette structure fibreuse.

Suivant d'autres caractéristiques de ce procédé selon l'invention, on déroule la structure fibreuse susmentionnée de son mandrin d'appel, et on la déploie et l'enroule sur un outil dont la forme correspond à celle de ladite pièce.

D'autres caractéristiques et avantages de la présente invention apparaîtront à la lumière de la description qui va suivre, et à l'examen des figures ci-annexées, dans lequelles :
- la figure 1 représente en perspective un mixeur de flux pour turboréacteur selon l'invention,
- la figure 2 représente en perspective une partie d'une structure fibreuse couvrant deux lobes, pour réaliser une pièce tubulaire à lobes,
- la figure 3 représente une variante de structure fibreuse à fibres inclinées,
- la figure 4 représente une variante d'une partie de structure fibreuse pour mixeur de flux, comprenant des lobes de formes et de hauteurs différentes,
- la figure 6 illustre un procédé de fabrication d'une structure fibreuse de la figure 2 ou 4, et

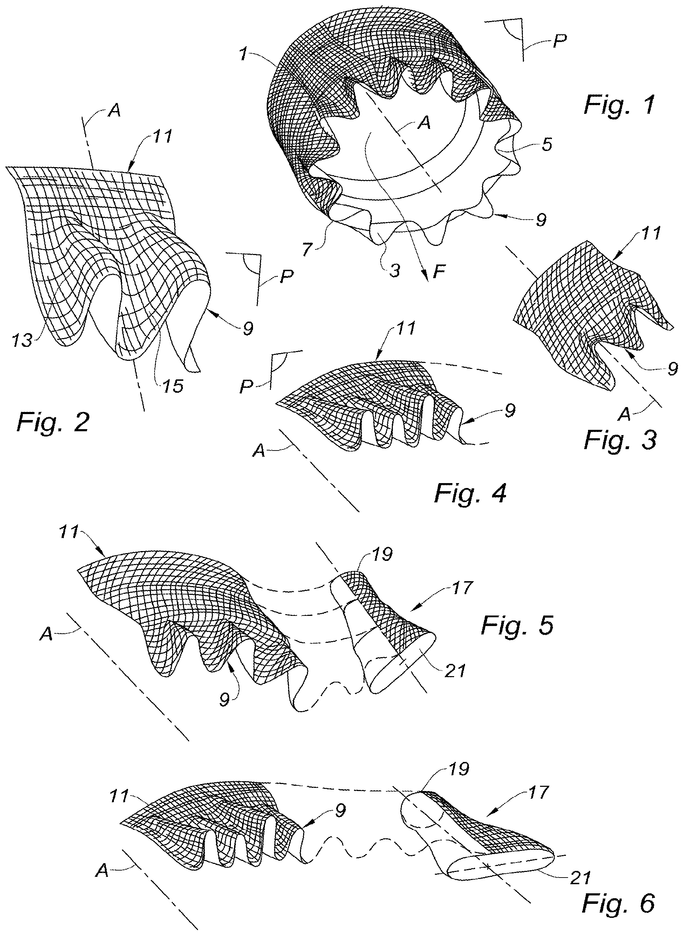

- la figure 5 illustre un procédé de fabrication d'une structure fibreuse à fibres inclinées de la figure 3.

Sur l'ensemble de ces figures, des références identiques ou analogues désignent des organes ou ensembles d'organes identiques ou analogues.

On a représenté, sur la figure 1, un mixeur pour turboréacteur d'aéronef, centré autour d'un axe longitudinal A.

Un tel mixeur comprend typiquement une partie amont 1 (par rapport au sens de l'écoulement de l'air en fonctionnement, indiqué par la flèche F) de section transversale sensiblement circulaire, et une partie aval 3 présentant des creux 5 et des bosses 7, couramment désignés par le terme « lobes » 9.

Un tel mixeur est destiné à être disposé sur le bord de fuite de la tuyère séparant le flux d'air froid du flux d'air chaud d'un turboréacteur d'aéronef à double flux, afin de réaliser un meilleur mélange de ces deux flux, et ainsi améliorer les performances acoustiques et de consommation du moteur.

Selon l'invention, ce mixeur est réalisé en matériau composite comprenant une matrice (pouvant être à base de céramique par exemple) emprisonnant au moins une structure fibreuse 11, cette structure fibreuse 11 s'étendant sur au moins deux lobes du mixeur, comme cela est visible à la figure 2.

De préférence, cette structure fibreuse 11 s'étend sur la totalité des lobes du mixeur, en en faisant éventuellement plusieurs tours : de la sorte, on réalise la structure fibreuse du mixeur d'un seul tenant, ce qui évite de découper et superposer partiellement des nappes de structure fibreuse comme c'était le cas dans la technique antérieure.

Comme visible à la figure 2, les fibres longitudinales 13 peuvent être parallèles à l'axe A, et les fibres circonférentielles 15 sont contenues dans des plans transversaux P perpendiculaires à cet axe.

En variante, comme visible à la figure 3, les fibres longitudinales 13 sont inclinées par rapport à l'axe A.

Cette inclinaison peut être constante sur toute la longueur de ces fibres longitudinales, ou bien varier sur cette longueur, tout en demeurant constante dans tout plan transversal P.

Cette inclinaison peut aller typiquement jusqu'à 45 degrés.

Sur les figures 2 et 3, les lobes de la structure fibreuse 11 sont identiques, mais on peut aussi envisager que ces lobes soient tous ou en partie différents les uns des autres, comme cela est visible à la figure 4.

De préférence, mais de manière non limitative, la densité circonférentielle de fibres longitudinales 13 est constante.

De préférence, mais de manière non limitative, la densité longitudinale de fibres circonférentielles 15 est constante.

De manière optionnelle, et comme cela est visible notamment sur la figure 1 ci-annexée, le périmètre de la pièce dans la zone des lobes est plus grand que la plus petite circonférence de la pièce dans la zone des lobes.

Le ou les matériaux formant lesdites fibres 13, 15 sont choisis de préférence dans le groupe comprenant le verre, le basalte, le carbone, le carbure de silicium, les oxydes d'aluminium ou les aluminosilicates.

La structure fibreuse 11 peut être obtenue par tissage ou enroulement filamentaire.

La présente invention se rapporte également à un procédé de fabrication d'une structure fibreuse tubulaire à lobes, dans lequel on tisse cette structure fibreuse autour d'un mandrin d'appel présentant une forme correspondant à celle de cette structure fibreuse.

On a représenté sur la figure 5, de manière schématique, un procédé de fabrication de la structure fibreuse 11 de la figure 3.

Comme cela est visible sur les figures 5 et 6, on dispose à la sortie d'un métier à tisser (non représenté) un mandrin d'appel 17 qui est une sorte de bobine de forme particulière sur laquelle viennent s'enrouler les fils de chaîne et de trame sortant du métier à tisser.

Les fils de trame sont destinés à former les fibres longitudinales 13 de la structure fibreuse 11, et les fils de chaîne sont destinés à former les fibres circonférentielles 15 de cette structure fibreuse.

Du fait de sa forme particulière, allant progressivement d'une section circulaire 19 vers une section oblongue 21, le mandrin d'appel 17 permet de tirer à des vitesses différentes les fils de chaîne sortant du métier à tisser, et ainsi de constituer une structure fibreuse qui, une fois déroulée de ce mandrin, peut être déployée et enroulée sur un outil dont la forme correspond à celle du mixeur à obtenir.

Sur la figure 6, on a représenté une variante du procédé selon l'invention, dans laquelle on utilise un mandrin d'appel asymétrique 17 permettant de réaliser une structure fibreuse à lobes différents, comme cela est le cas de la structure fibreuse représentée à la figure 4.

Sur la figure 5, on a représenté une variante du procédé selon l'invention, dans laquelle la préforme comporte des fibres longitudinales inclinées, lesquelles ont été enroulées inclinées sur le mandrin d'appel 17.

De préférence, la pièce tubulaire à lobes de la figure 1 est constituée par plusieurs couches de préformes selon l'invention, lesquelles peuvent être d'un seul type ou de plusieurs types différents. Sur la figure 1 sont présentées successivement sur la circonférence du mixer, un partie de préforme fibreuse selon l'invention comportant des fibres circonférentielles et des fibres longitudinales inclinées vers la droite, une partie de préforme fibreuse selon l'invention comportant des fibres circonférentielles et des fibres longitudinales sensiblement parallèles à l'axe A de la pièce tubulaire, et une partie de préforme fibreuse selon l'invention comportant des fibres circonférentielles et des fibres longitudinales inclinées vers la gauche.

Ainsi par superposition de préformes fibreuses selon différents types contenant des fibres dans différentes directions, on optimise la raideur et la résistance de la structure composite du mixer.

En fonction de la répétition de forme des lobes de la pièce tubulaire, chaque préforme fibreuse peut couvrir de 2 lobes ou jusque un tour complet ou plus d'un tour de la pièce tubulaire. Notamment, si les lobes sont identiques ou si un sur deux sont identiques, on pourra constituer un tour complet au moins de la pièce à lobes avec une même préforme.

Avant ou après enroulement sur l'outil en forme finale, les structures fibreuses 11 sont imprégnées du matériau destiné à former la matrice du composite. S'ensuit la consolidation de la matrice pour rigidifier la pièce.

Bien entendu, la présente invention n'est pas limitée au mode de réalisation décrit et représenté, fourni à titre d'exemple illustratif et non limitatif.

## Revendications

1. Structure fibreuse (11) tubulaire à lobes (9), **caractérisée en ce qu'**elle est formée d'un seul tenant sur au moins deux lobes, et **en ce que** ses fibres circonférentielles (15) présentent une orientation constante par rapport à l'axe longitudinal (A) de ladite structure, dans tout plan (P) transversal audit axe, et ce qu'elle est obtenue par tissage ou par enroulement filamentaire.

2. Structure fibreuse (11) selon la revendication 1, **caractérisée en ce qu'**elle comprend entre deux lobes (9) et jusqu'à une pluralité de lobes.

3. Structure fibreuse (11) selon l'une des revendications 1 ou 2, **caractérisée en ce qu'**elle comprend des lobes (9) de formes différentes.

4. Structure fibreuse (11) selon l'une quelconque des revendications précédentes, **caractérisée en ce qu'**elle comprend des fibres longitudinales (13) inclinées par rapport audit axe longitudinal (A).

5. Structure fibreuse (11) selon la revendication 4, **caractérisée en ce que** l'intersection, avec le plan transversal (P), desdites fibres longitudinales (13) par rapport audit axe (A) varie selon la position dudit plan transversal (P).

6. Structure fibreuse (11) selon l'une quelconque des revendications précédentes, **caractérisée en ce qu'**elle comprend une densité circonférentielle constante de fibres longitudinales (13).

7. Structure fibreuse (11) selon l'une quelconque des revendications précédentes, **caractérisée en ce qu'**elle comprend une densité longitudinale constante de fibres circonférentielles (15).

8. Structure fibreuse (11) selon l'une quelconque des revendications précédentes, **caractérisée en ce que** le ou les matériaux formant lesdites fibres (13, 15) sont choisis dans le groupe comprenant le verre, le basalte, le carbone, le carbure de silicium, les oxydes d'aluminium, les aluminosilicates.

9. Pièce en composite obtenue à partir d'au moins une structure fibreuse conforme à l'une quelconque des revendications précédentes, prise dans une matrice.

10. Pièce en composite selon la revendication 9 obtenue à partir d'au moins deux structures fibreuses différentes conformes à l'une quelconque des revendications 1 à 8, prises dans une matrice.

11. Pièce en composite selon l'une des revendications 9 ou 10, obtenue à partir d'au moins une structure fibreuse conforme aux revendications 1 et 3, **caractérisée en ce qu'**elle comprend des lobes (9) présentant des formes différentes.

12. Pièce en composite selon l'une des revendications 9 et 10, **caractérisée en ce qu'**elle comprend des lobes (9) dont les hauteurs sont variables suivant la position dudit plan transversal (P).

13. Mixeur de flux pour turboréacteur d'aéronef, **caractérisé en ce qu'**il est formé d'une pièce conforme à l'une quelconque des revendications 9 à 12.

14. Procédé de fabrication d'une pièce en composite conforme à l'une quelconque des revendications 9 à 12, dans lequel, pour la ou chaque structure fibreuse (11), on tisse cette structure fibreuse (11) autour d'un mandrin d'appel (17) présentant une forme correspondant à celle de cette structure fibreuse (11), on déroule la structure fibreuse de son mandrin d'appel, et on la déploie et l'enroule sur un outil dont la forme correspond à celle de ladite pièce en composite, et dans lequel avant ou après enroulement sur l'outil, la ou les structures fibreuses (11) sont imprégnées du matériau destiné à former la matrice du composite.

## Patentansprüche

1. Rohrförmige Faserstruktur (11) mit Ausbuchtungen (9), **dadurch gekennzeichnet, dass** sie an mindestens zwei Ausbuchtungen einstückig ausgebildet ist, und dass ihre Umfangsfasern (15) eine konstante Orientierung in Bezug auf die Längsachse (A) der Struktur in jeder Ebene (P) quer zu der Achse aufweisen, und dass sie durch Weben oder durch Filamentwicklung hergestellt wird.

2. Faserstruktur (11) nach Anspruch 1, **dadurch gekennzeichnet, dass** sie zwischen zwei Ausbuchtungen (9) und bis zu einer Vielzahl von Ausbuchtungen umfasst.

3. Faserstruktur (11) nach einem der Ansprüche 1 oder 2, **dadurch gekennzeichnet, dass** sie Ausbuchtungen (9) mit unterschiedlichen Formen umfasst.

4. Faserstruktur (11) nach einem der vorhergehenden Ansprüche, **dadurch gekennzeichnet, dass** sie Längsfasern (13) umfasst, die in Bezug auf die Längsachse (A) geneigt sind.

5. Faserstruktur (11) nach Anspruch 4, **dadurch gekennzeichnet, dass** der Schnittpunkt der Längsfasern (13) mit der Querebene (P) in Bezug auf die Achse (A) gemäß der Position der Querebene (P) variiert.

6. Faserstruktur (11) nach einem der vorhergehenden Ansprüche, **dadurch gekennzeichnet, dass** sie eine konstante Umfangsdichte der Längsfasern (13) umfasst.

7. Faserstruktur (11) nach einem der vorhergehenden Ansprüche, **dadurch gekennzeichnet, dass** sie eine konstante Längsdichte der Umfangsfasern (15) umfasst.

8. Faserstruktur (11) nach einem der vorhergehenden Ansprüche, **dadurch gekennzeichnet, dass** das Material oder die Materialien, die die Fasern (13, 15) bilden, aus der Gruppe ausgewählt sind, die Glas, Basalt, Kohlenstoff, Siliziumkarbid, Aluminiumoxide und Aluminosilikate umfasst.

9. Verbundwerkstoffteil, das aus mindestens einer Faserstruktur gemäß einem der vorhergehenden Ansprüche hergestellt ist, die in einer Matrix eingebettet ist.

10. Verbundwerkstoffteil nach Anspruch 9, das aus mindestens zwei verschiedenen Faserstrukturen nach einem der Ansprüche 1 bis 8 hergestellt ist, die in einer Matrix eingebettet sind.

11. Verbundwerkstoffteil nach einem der Ansprüche 9 oder 10, das aus mindestens einer Faserstruktur gemäß den Ansprüchen 1 und 3 hergestellt ist, **dadurch gekennzeichnet, dass** sie Ausbuchtungen (9) umfasst, die unterschiedliche Formen aufweisen.

12. Verbundwerkstoffteil nach einem der Ansprüche 9 und 10, **dadurch gekennzeichnet, dass** sie Ausbuchtungen (9) umfasst, deren Höhen je nach der Position der Querebene (P) variabel sind.

13. Strömungsmischer für Flugzeug-Turbostrahltriebwerke, **dadurch gekennzeichnet, dass** er aus einem Bauteil gemäß einem der Ansprüche 9 bis 12 ausgebildet ist.

14. Verfahren zum Herstellen eines Verbundwerkstoffteils gemäß einem der Ansprüche 9 bis 12, wobei für die oder jede Faserstruktur (11) die Faserstruktur (11) um einen Aufnahmedorn (17) gewebt wird, der eine Form aufweist, die der Form der Faserstruktur (11) entspricht, die Faserstruktur (11) von ihrem Aufnahmedorn abgewickelt wird und auf ein Werkzeug aufgesetzt und aufgewickelt wird, dessen Form der des Verbundwerkstoffteils entspricht, und wobei die Faserstruktur bzw. die Faserstrukturen (11) vor oder nach dem Aufwickeln auf das Werkzeug mit dem Material imprägniert werden, das dazu bestimmt ist, die Matrix des Verbundwerkstoffs zu bilden.

## Claims

1. A tubular fibrous structure (11) with lobes (9), **characterized in that** it is formed in one piece over at least two lobes, and **in that** its circumferential fibers (15) have a constant orientation with respect to the longitudinal axis (A) of said structure, in any plane (P) transverse to said axis, and **in that** it is obtained by weaving or by filament winding.

2. The fibrous structure (11) according to claim 1, **characterized in that** it comprises between two lobes (9) and up to a plurality of lobes.

3. The fibrous structure (11) according to any of claims 1 or 2, **characterized in that** it comprises lobes (9) with different shapes.

4. The fibrous structure (11) according to any one of the preceding claims, **characterized in that** it comprises longitudinal fibers (13) inclined with respect to said longitudinal axis (A).

5. The fibrous structure (11) according to claim 4, **characterized in that** the intersection, with the transverse plane (P), of said longitudinal fibers (13) with respect to said axis (A) varies depending on the position of said transverse plane (P).

6. The fibrous structure (11) according to any one of the preceding claims, **characterized in that** it comprises a constant circumferential density of longitudinal fibers (13).

7. The fibrous structure (11) according to any one of the preceding claims, **characterized in that** it comprises a constant longitudinal density of circumferential fibers (15).

8. The fibrous structure (11) according to any one of the preceding claims, **characterized in that** the material(s) forming said fibers (13, 15) are selected from the group comprising glass, basalt, carbon, silicon carbide, aluminum oxides, aluminosilicates.

9. A composite part obtained from at least one fibrous structure according to any one of the preceding claims, embedded in a matrix.

10. The composite part according to claim 9 obtained from at least two different fibrous structures in accordance with any one of claims 1 to 8, embedded in a matrix.

11. The composite part according to any of claims 9 or 10, obtained from at least one fibrous structure in accordance with claims 1 and 3, **characterized in that** it comprises lobes (9) having different shapes.

12. The composite part according to any of claims 9 and 10, **characterized in that** it comprises lobes (9) whose heights are variable depending on the position of said transverse plane (P).

13. A flow mixer for an aircraft turbojet engine, **characterized in that** it is formed by a part in accordance with any one of claims 9 to 12.

14. A method for manufacturing a composite part in accordance with any one of claims 9 to 12, wherein, for the or each fibrous structure (11), this fibrous structure (11) is woven around a take-up mandrel (17) having a shape corresponding to that of this fibrous structure (11), this fibrous structure (11) is unwound from its take-up mandrel, and is deployed and wound on a tool whose shape corresponds to that of said composite part, and in which before or after winding on the tool, the fibrous structure(s) (11) are impregnated with the material intended to form the matrix of the composite.
